Europäisches Patentamt

European Patent Office

Office européen des brevets

(19)

(11) Veröffentlichungsnummer: **0 315 855 B1**

(12) **EUROPÄISCHE PATENTSCHRIFT**

(45) Veröffentlichungstag der Patentschrift: **22.07.92**

(51) Int. Cl.5: **H04N 5/33**, H04N 5/217

(21) Anmeldenummer: **88118088.9**

(22) Anmeldetag: **31.10.88**

(54) **Strahlungsdetektor-Vorrichtung.**

(30) Priorität: **11.11.87 DE 3738263**

(43) Veröffentlichungstag der Anmeldung:
**17.05.89 Patentblatt 89/20**

(45) Bekanntmachung des Hinweises auf die
Patenterteilung:
**22.07.92 Patentblatt 92/30**

(84) Benannte Vertragsstaaten:
**DE FR GB IT NL**

(56) Entgegenhaltungen:
**DE-A- 3 431 994**
**DE-A- 3 633 286**
**GB-A- 1 264 277**

**FUNKSCHAU, Band 57, Nr. 21, Oktober 1985,**
**Seiten 55-58, München, DE; A. KÖHLER et al.:**
**"CCD-Sensoren, Fotoelemente, pyroelektr.**
**Vidikon"**

(73) Patentinhaber: **Licentia Patent-**
**Verwaltungs-GmbH**
**Theodor-Stern-Kai 1**
**W-6000 Frankturt/Main 70(DE)**

(72) Erfinder: **Haas, Luis-Dieter, Dr. Ing.**
**Brahmstrasse 34**
**W-7100 Heilbronn-Biberach(DE)**

(74) Vertreter: **Amersbach, Werner, Dipl.-Ing. et al**
**Licentia Patent-Verwaltungs-GmbH Theodor-**
**Stern-Kai 1**
**W-6000 Frankturt 70(DE)**

EP 0 315 855 B1

# Beschreibung

Die vorliegende Erfindung betrifft eine Strahlungsdetektor-Vorrichtung nach dem Oberbegriff des Patentanspruchs 1.

Solche Detektorvorrichtungen sind bevorzugt für Infrarotstrahlung empfindlich und werden zum Beispiel zur Erstellung von Wärmebildern verwendet (siehe z.B. GB-A-1 264 277). Die einzelnen Detektorelemente bestehen aus photoleitenden Widerständen, die bevorzugt nebeneinanderliegend in Zeilen angeordnet sind und in einem vakuumdicht verschlossenen Gehäuse untergebracht sind. In Betrieb durchfließt ein Gleichstrom alle Elemente. Zur Abnahme der bei Strahlungseinwirkung sich ändernden Signalspannungen an den einzelnen Widerstandselementen ist der eine Pol eines jeden Widerstandselementes mit einer Signalleitung verbunden, die aus dem vakkumdichten Gehäuse herausgeführt ist. Greift man die Signalspannung bezüglich einer Versorgungsleitung ab, so ergibt sich wegen des unvermeidlichen Leitungswiderstandes der den Gleichstrom leitenden Versorgungsleitung eine gegenseitige Beeinflussung der einzelnen Signalspannungen. Dieses Übersprechen ist umso größer, je mehr Detektorelemente vorhanden sind.

Man hat bereits vorgeschlagen, bei Detektoren mit sehr vielen Elementen, z. B. mit 180 Elementen, für jeweils 5 Elemente eine eigene Versorgungsleitung vorzusehen, um dadurch das Übersprechen in Grenzen zu halten. Nachteilig wirkt sich dabei die notwendigerweise größere Anzahl von in das Gehäuse einzuführenden Versorgungsleitungen aus. Will man noch mehr Detektorelemente, z. B. 288 elemente, vorsehen, so bereitet das Problem der vielen vakuumdichten Durchführungen größere Schwierigkeiten.

Der vorliegenden Erfindung liegt die Aufgabe zugrunde, auch bei kleinen Detektorvorrichtungen eine größere Anzahl von Detektorelementen verwenden zu können, insbesondere die Anzahl der Durchführungen auch bei großer Elementenzahl gering halten zu können.

Diese Aufgabe wird durch die im Kennzeichen des Patentanspruchs 1 beschriebenen Merkmale gelöst.

Weitere vorteilhafte Ausgestaltungen ergeben sich aus den Unteransprüchen.

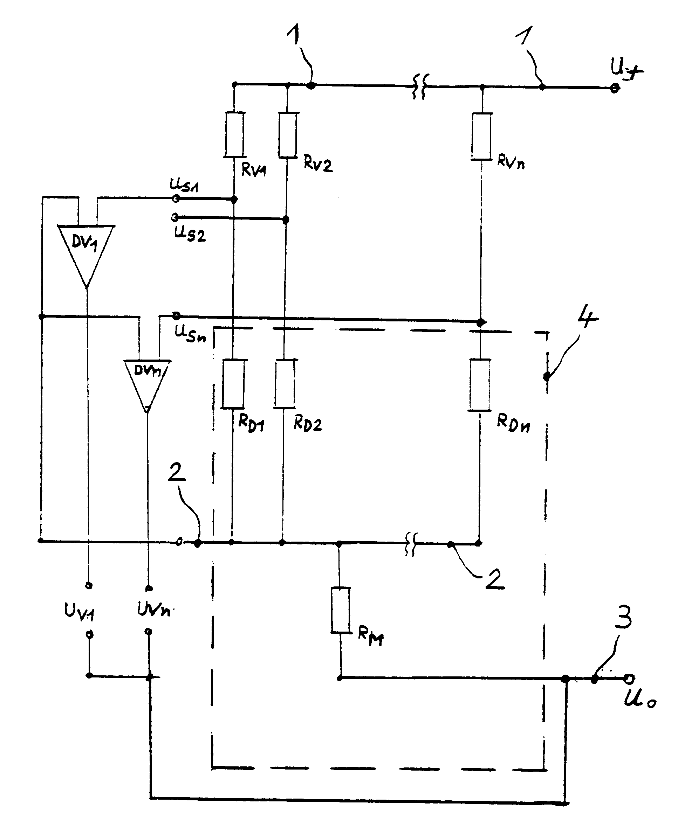

Anhand des in der Figur dargestellten Ausführungsbeispiels wird die Erfindung nachfolgend näher erklärt.

Der Detektor weist eine Vielzahl, z. B. 288, Detektorelemente $R_{D1}...R_{Dn}$ auf, die z. B. aus in zwei Zeilen angeordneten flächigen photoleitenden Widerstandsbelägen auf einem Isoliersubstrat bestehen. In Reihe mit jedem Detektorelement $R_D$ liegt ein Vorwiderstand $R_{V1}...R_{Vn}$. Die Reihenschaltungen von $R_D$ und $R_V$, z. B. 288 Stück, liegen parallel zueinander und werden über die Versorgunsleitungen 1 und 3 mit Gleichstrom versorgt. Der Leitungswiderstand der Leitung 3 ist mit $R_M$ bezeichnet.

Der eine Pol eines jeden Detektorelements $R_{D1}$ ... $R_{Dn}$ ist getrennt aus dem gestrichelt dargestellten Vakuumgehäuse 4 herausgeführt und jeweils mit einer Signalleitung $U_{s1}...U_{sn}$ verbunden. Für n = 288 Detektorelemente $R_D$ sind also 288 Signalleitungen $U_S$ vorgesehen. Die anderen Pole eines jeden als Zweipol aufzufassenden strahlungsempfindlichen Detektorwiderstandes $R_D$ sind mit einer weitere allen Detektorelementen gemeinsamen Signal-Masseleitung 2 verbunden, die getrennt von der Gleichstrom führenden Versorgungsleitung 3 aus dem Gehäuse 4 herausgeführt ist.

Gemäß der Erfindung ist nun für jedes Detektorelement $R_D$ ein Differenzverstärker $DV_1$ ... $DV_n$ vorgesehen, dessen einer Signaleingang jeweils mit Signalausgang $U_{s1}$ ... $U_{sn}$ des zugehörigen Detektorelementes $R_{D1}$ ... $R_{Dn}$ verbunden ist. Der zweite Signaleingang aller Differenzvorverstärker $DV_1$ ... $D_{Vn}$ ist mit der gemeinsamen Signal-Masseleitung 2 verbunden, die die anderen Pole der Detektorelemente $R_{D1}$ ... $R_{Dn}$ miteinander verbindet. Die Differenzverstärker befinden sich außerhalb des vakuumdicht verschlossenen Gehäuses 4, in dem die Detektorelemente untergebracht sind. Die Gleichstromversorgungsleitungen für die Differenzvorverstärker DV sind nicht dargestellt. Da sich diese Vorverstärker außerhalb des Gehäuses 4 befinden, benötigen diese aber keine vakuumdichten Durchführungen.

Die Abnahme der verstärkten Ausgangssignale erfolgt dann am Signalausgang eines jeden der Vorverstärker $DV_1$ ... $DV_n$, insbesondere in bezug auf die Versorgungsleitung 3. Die Gleichspannung zwischen den Versorungsleitungen 1 und 3 beträgt beispielsweise 5 V.

## Patentansprüche

1. Strahlungsdetektorvorrichtung mit einer Vielzahl von strahlungsempfindlichen zweipoligen Widerstandelementen ($R_{D1}$-$R_{Dn}$),die bezüglich zweier Versorgungsleitungen parallel zueinander angeordnet und zumindest mit ihrem einen Pol mit Signalleitungen verbunden sind und bei der jedem strahlungsempfindlichen Widerstandselement ein Differenzvorverstärker zugeordnet ist, dessen einer Signaleingang jeweils mit einer Signalleitung eines zugeordneten strahlungsempfindlichen Widerstandselementes verbunden ist, dadurch gekennzeichnet, daß die strahlungsempfindlichen Widerstandselemente ($R_{D1}$-$R_{Dn}$) innerhalb eines vakuumdicht verschlossenen Gehäuses (4) angeordnet sind, daß die mit den außerhalb des Gehäuses (4) angeordneten Differenzvorverstärkern ($D_{V1}$-$D_{Vn}$) verbundenen Signalleitungen ($U_{S1}$-$U_{Sn}$) getrennt aus dem Gehäuse (4) herausgeführt sind, daß die anderen Pole der strahlungsempfindlichen Widerstandselemente ($R_{D1}$-$R_{Dn}$) mit einer gemeinsamen Masseleitung (2) verbunden sind, die als weitere Signalleitung aus dem Gehäuse (4) herausgeführt und mit den anderen Signaleingängen der Differenzvorverstärker ($D_{V1}$-$D_{Vn}$) verbunden ist, und daß die verstärkten Signalspannungen ($U_{V1}$-$U_{Vn}$) zwischen den jeweiligen Signalausgängen der Differenzvorverstärker ($D_{V1}$-$D_{Vn}$) und einer getrennt aus dem Gehäuse (4) herausgeführten Versorgungsleitung (3) abgenommen werden.

2. Strahlungsdetektorvorrichtung nach Anspruch 1, dadurch gekennzeichnet, daß die mit dem jeweiligen Signalausgängen ($U_{S1}$...$U_{Sn}$) verbundenen Pole der Widerstandselemente ($R_{D1}$...$R_{Dn}$) jeweils über Vorwiderstände ($R_{V1}$...$R_{Vn}$) mit einer Versorgungsleitung (1) verbunden sind.

## Claims

1. Radiation detector arrangement with a plurality of two-pole radiation-sensitive resistance elements ($R_{D1}$ to $R_{D2}$), which are arranged one in parallel to the other with respect to two supply lines and connected by at least their one pole with signal lines and in which each radiation-sensitive resistance element is associated with a differential pre-amplifier, the one signal input of which is connected with a respective signal line of an associated radiation-sensitive resistance element, characterised thereby, that the radiation-sensitive resistance elements ($R_{D1}$ to $R_{D2}$) are arranged within a housing (4), which is closed off to be vacuum-tight, that the signal lines ($U_{s1}$ to $U_{sn}$), which are connected with the differential pre-amplifiers ($D_{v1}$ to $D_{vn}$) arranged externally of the housing (4), are led separately out of the housing (4), that the other poles of the radiation-sensitive resistance elements ($R_{D1}$ to $R_{D2}$) are connected with a common ground line (2), which is led out of the housing (4) as further signal line and connected with the other signal inputs of the differential pre-amplifiers ($D_{v1}$ to $D_{vn}$), and that the amplified signal voltages ($U_{v1}$ to $U_{vn}$) are derived between the respective signal outputs of the differential pre-amplifiers ($D_{v1}$ to $D_{vn}$) and a supply line (3) led separately out of the housing (4).

2. Radiation detector arrangement according to claim 1, characterised thereby, that the poles, which are connected with the respective signal outputs ($U_{s1}$ to $U_{sn}$), of the resistance elements ($R_{D1}$ to $R_{Dn}$) are each connected by way of a respective series resistor ($R_{v1}$ to $R_{vn}$) with a supply line (1).

## Revendications

1. Dispositif détecteur de rayonnement comportant une pluralité d'éléments résistants dipolaires sensibles au rayonnement ($R_{D1}$... $R_{Dn}$) qui, par rapport à deux lignes d'alimentation, sont agencés en parallèle les uns des autres et sont reliés, au moins par leur premier pôle, à des lignes de signal, un préamplificateur différentiel étant associé à chaque élément résistant sensible au rayonnement, la première entrée de signal de chaque préamplificateur étant reliée à une ligne de signal d'un élément résistant, sensible au rayonnement, qui lui est conjugué, caractérisé par le fait que les éléments résistants sensibles au rayonnement ($R_{D1}$... $R_{Dn}$) sont agencés à l'intérieur d'une enceinte (4) fermée avec étanchéité au vide, par le fait que les lignes de signal ($U_{S1}$ - $U_{Sn}$) reliées aux préamplificateurs différentiels ($D_{V1}$ - $D_{Vn}$) disposés à l'extérieur de l'enceinte (4) sortent séparément de ladite enceinte (4), par le fait que les autres pôles des éléments résistants sensibles au rayonnement ($R_{D1}$... $R_{Dn}$) sont reliés à une ligne de masse commune (2) qui sort de l'enceinte (4) en tant qu'autre ligne de signal et qui est reliée aux autres entrées de signal des préamplificateurs différentiels ($D_{V1}$ - $D_{Vn}$), et par le fait que les tensions de signal ($U_{V1}$ - $U_{Vn}$) amplifiées sont prélevées entre les sorties de signal concernées des préamplificateurs différentiels ($D_{V1}$ - $D_{Vn}$) et une ligne d'alimentation (3) sortant séparément de l'enceinte (4).

2. Dispositif détecteur de rayonnement selon revendication 1, caractérisé par le fait que les pôles des éléments résistants ($R_{D1}$... $R_{Dn}$), reliés aux sorties de signal concernées ($U_{S1}$...$U_{Sn}$) , sont reliés, par des résistances série ($R_{V1}$... $R_{Vn}$) respectives à une ligne d'alimentation (1).